# EUROPEAN PATENT APPLICATION

(11) **EP 1 330 082 A2**
(43) Date of publication of application: **23.07.2003**
(21) Application number: 02258129.2
(22) Date of filing: 26.11.2002
(51) Int. Cl.: H04L 12/58

(54) **Computer network for providing services controlled by e-mail**

(30) Priority: 17.01.2002 US 52612
(71) Applicant: Hewlett-Packard Company, Palo Alto, CA 94304 (US)
(72) Inventor: Pisupati, Ravikumar, San Jose, Ca 95135 (US)
(74) Representative: Jehan, Robert

(57) **Abstract**

A computer network or system (100) for providing services (52a-52z) that are controlled by email messages (40) comprising a plurality of computing elements (20a-20z) each of which has computing resources (90) for supporting one or more services (52) and a redirector (51, 51a), communicatively connected to each of the computing elements (20a-20z) and configured to serve as an email proxy for the computing elements (20a-20z), where the services (52a-52z) are controlled by email messages (40) routed by the redirector (51, 51a) among the computing elements (20a-20z).

## Description

The present invention pertains to the field of computer networks. More particularly, this invention relates a computer network for providing services and a method of providing services.

This application is related to U.S. Patent Application 09/768,432, filed 24 January 2001, by Ravikumar Pisupati and James M. Sangroniz, entitled "Accessing Services Across Network Security Mechanisms".

A distributed computing environment commonly includes a variety of computing elements that are interconnected by a network. Examples of computing elements include computer systems, server systems, etc., as well as specialized devices having computing resources. The computing elements of a distributed computing environment may be arranged into one or more discrete networks such as local area networks and/or organizational networks that, in turn, may be interconnected through larger networks such as the Internet.

One or more of the computing elements in a distributed computing environment may provide services that may be accessed through a network. An example of such a service is a web page. Another example of such a service is a distributed application program.

In many instances, it is desirable to invoke a service on a particular computing element from another computing element via the network. For example, it may be desirable to enable a technician located at a diagnostic system to invoke a diagnostic program on a remote computing element without having to physically travel to the remote site.

One prior method for invoking a service via a network is to use web protocols such as the hypertext transfer protocol (HTTP). For example, JAVA application programs may be invoked on a remote computing element using HTTP commands.

Prior discrete networks commonly include security mechanisms for preventing unauthorized access from outside of the discrete network. One example of such a security mechanism is a firewall. Typically, HTTP commands sent by computing elements that are not appropriately configured cannot pass through a firewall. Unfortunately, such a security mechanism can present a substantial obstacle to legitimately accessing services from outside of a discrete network.

The present invention seeks to provide an improved network.

According to an aspect of the present invention there is provided a computer network as specified in claim 1.

According to another aspect of the present invention there is provided a method of providing services with a computer network as specified in claim 5.

The present invention may be embodied, for example, in a computer network or system for providing services that are controlled by email messages. One embodiment of the invention is a network comprising a plurality of computing elements each of which comprises computing resources for supporting one or more services and a redirector, communicatively connected to each of the computing elements, configured to serve as an email proxy for the plurality of computing elements, wherein the services are controlled by email messages routed by the redirector among the plurality of computing elements.

The present invention also encompasses a method of providing services with a computer network that comprises a plurality of computing elements each of which comprise computing resources for supporting one or more services, and a redirector, communicatively connected to each of the computing elements, the method comprising receiving an e-mail message addressed to one of the computing elements for controlling a service; and routing some or all or the e-mail message to a corresponding computing element with the redirector which is configured to function as an e-mail proxy for the computing elements.

Embodiments of the present invention are described below, by way of example only, with reference to the drawings, in which:
Fig. 1 illustrates one embodiment of a computer network;
Fig. 2 illustrates one embodiment of a service handler;
Fig. 3 illustrates one embodiment of a mail handler;
Fig. 4 illustrates one embodiment of a computing element as used, for example, in a network like that of Fig. 1;
Fig. 5 illustrates one embodiment of a computer network, where the network incorporates a redirector as an email proxy for a number of computing elements, each computing element providing a service handler and one or more services.
Fig. 6 is a flowchart illustrating a method implemented by a system such as that illustrated in Fig. 5;
Fig. 7 illustrates one embodiment of a computer network, where the network incorporates a redirector comprises a service handler for supporting a number of computing elements that each provide one or more services; and
Fig. 8 is a flowchart illustrating a method implemented by a system such as that illustrated in Fig. 7.

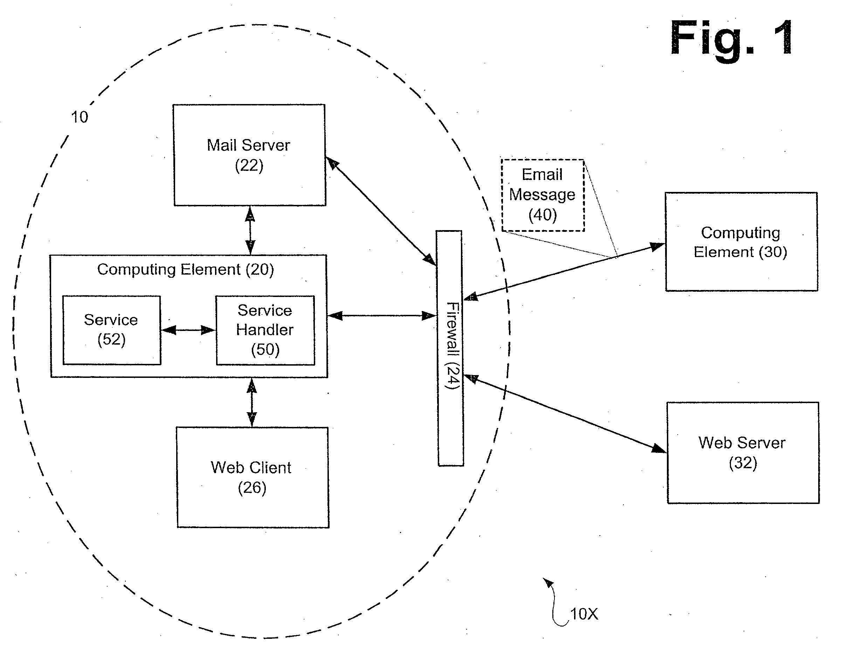

Fig. 1 shows a network (10X) that comprises a discrete network (10) having a firewall (24) behind which is a computing element (20), a mail server (22), and a web client (26). The computing element (20) executes a service handler (50) that supports a service (52). Although only the service (52) is shown, the service handler (50) may enable access to any number of services on the computing element (20) according to the present teachings. The network (10X) includes a computing element (30) that accesses the service (52) through the firewall (24).

The computing element (20) has an email address that is used by the mail server (22) to identify email messages intended for the computing element (20). The computing element (30) accesses the service (52) of the computing element (20) by transferring an email message (40) to the email address of the computing element (20) using standard email protocols. Thus email commands are used to invoke the service (52) rather than HTTP commands sent directly to the computing element (20).

The email message (40) passes through the firewall (24) to the mail server (22). The service handler (50) then obtains the email message (40) from the mail server (22). The service handler (50) then performs an access function or command that is specified in the email message (40). One example of an access function specified in the email message (40) is a command to invoke a service (52). Another example of an access function is a command or data input to the service (52) after service (52) is invoked. An example of a command is a command that causes the service (52) to return log data to a return email address.

In one embodiment, the email message (40) carries the service (52) along with a command that instructs the service handler (50) to invoke the service (52). In which case, the access function would be the service and the command to extract and invoke the service. Accordingly, the service handler (50) extracts the service (52) and associated parameters from the email message (40) and then loads and runs the service (52) using the computing resources of the computing element (20).

Alternatively, the email message (40) may provide directions for obtaining a service from a specified location. In which case, the access function may be a command to download the service from that location or access the service at that location. In other words, the email message (40) may carry a Universal Resource Locator address (URL) that specifies a source from which the service (52) is to be obtained along with a command that instructs the service handler (50) to obtain and invoke the service (52) from the specified URL. In response, the service handler (50) extracts the command and associated URL from the email message (40) and then obtains the service (52) from the specified URL using HTTP protocols. For example, the specified URL may correspond to a web server (32) that stores the service (52) and the service handler (50) uses HTTP commands to obtain the service (52) from the web server (32). The service handler (50) then installs and runs the service (52) using the computing resources of the computing element (20).

In yet another embodiment, the service (52) is running on the computing element (20) and the computing element (30) uses the email message (40) to send commands or input data to the service (52). For example, if the service (52) is a diagnostic program then the email message (40) may carry commands such as start diagnostic logging, stop diagnostic logging, and return information log, etc.

A web client (26) may access the service (52) using HTTP protocols when the service (52) is running on the computing element (20). The service handler (50) generates web pages that enable the web client (26) to send commands and other information targeted for the service (52) using HTTP commands and the service handler (50) passes on the commands and information to the service (52) in response to the HTTP commands. The web pages also enable the web client (26) to obtain information from the service (52) using HTTP commands. The service handler (50) obtains the specified information from the service (52) and passes on the information to the web client (26) in response to the HTTP commands. Alternatively, the web client (26) may access the service (52) using email messages using an appropriate mail server, e.g., mail server (22).

The email message (40) may include a response email address to which a response to the message (40) is to be sent. The response email address may correspond to the originator of the email message (40), the computing element (30), or some other email account. The service handler (50) sends a response message to the response email address. A response message may include status information regarding the success/failure of the command contained in the email message (40) and/or response information generated by the service (52).

The computing element (20) represents any device or system, know known or later developed, having computing resources and the appropriate hardware/software for obtaining the email message (40) from the mail server (22) and for loading and executing the service (52). Examples of the computing element (20) include computer systems, handheld devices, input/output devices, peripheral devices including storage devices, printers, scanners, etc., specialized devices such as measurement and/or actuator instruments, wireless devices, appliances, etc., to name just a few examples.

The computing element (30) represents any device or system now known or later developed that is capable of sending the email message (40) and optionally receiving a response email message from the computing element (20).

The service (52) may be a static file or an application program or other type of program. Service (52) may be embodied in software code that is adapted to the computing resources of the computing element (20). For example, in an embodiment in which the computing element (20) includes a JAVA virtual machine, the service (52) may be a JAVA application.

In an exemplary embodiment in which the computing element (20) is a device having computing resources, the service (52) may be an application program that performs a diagnostic function on the device (20). For example, the service (52) may obtain diagnostic information, possibly by invoking utilities already present on the computing element (20), and transfering the diagnostic result information back in a response email message.

The service handler (50) preferably comprises the functionality of a web server that generates one or more web pages for the computing element (20). One or more of the web pages of the computing element (20) may provide links to the services (e.g., 52) running on the computing element (20). The service (52), once installed on the computing element (20), may be accessed by web clients (e.g., 26) through the web pages of the computing element (20). Web clients that may access the web pages of the computing element (20) include web clients within the network (10) and/or web clients outside of the network (10) that are configured to pass through the firewall (24).

The firewall (24) has the appropriate hardware and software elements that function as a bridge between the discrete network (10) and elements on the larger network (10X). The firewall (24) does not pass HTTP commands from outside the network (10) that do not have an appropriately configured IP address.

In one embodiment, the service (52) and/or the command carried in the email message (40) is authenticated with a public/private key encryption. The computing device (30) digitally signs the email message (40) using a private key. The computing element (20) possesses the corresponding public key and uses it to authenticate the email message (40) once received. In addition, the email message (40) may be encrypted by the computing device (30) and decrypted by the computing element (20).

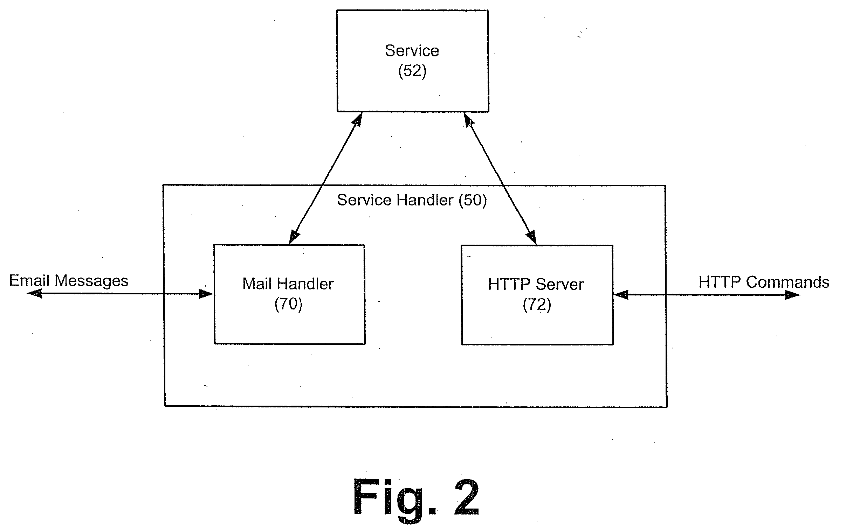

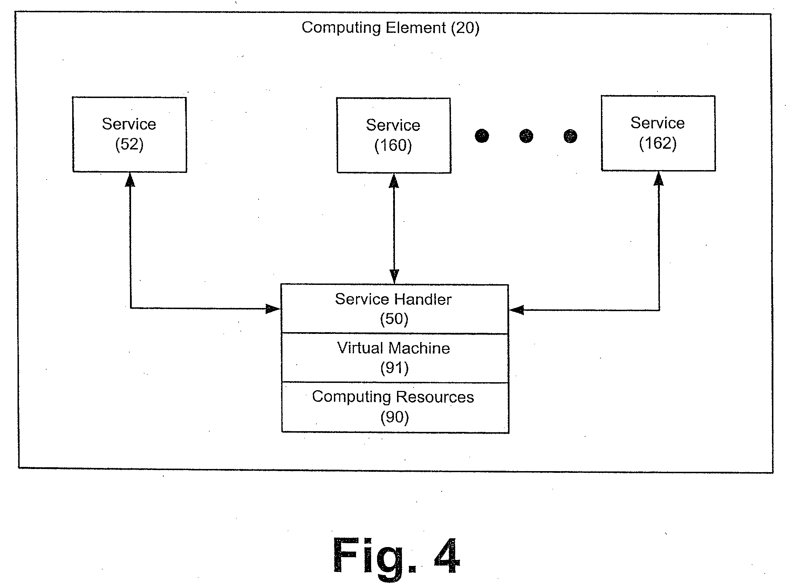

Fig. 2 illustrates an exemplary embodiment of the service handler (50) that comprieses a mail handler (70) and an HTTP server (72). In this embodiment, device (20) comprises a JAVA virtual machine (91; Fig. 4) that supports the mail handler (70) and the HTTP server (72).

The mail handler (70) obtains email messages from the mail server (22) and, in response, performs the appropriate access function. In one embodiment, the mail handler (70) uses public keys to verify the originators of the received email messages.

The HTTP server (72) enables web clients such as the web client (26) to access the service (52). Appropriately-configured web clients outside the discrete network (10) may also access the service (52) using the HTTP server (72). The HTTP server (72) generates web pages associated with the computing element (20) including web pages that provide links to commands or data inputs associated with the service (52).

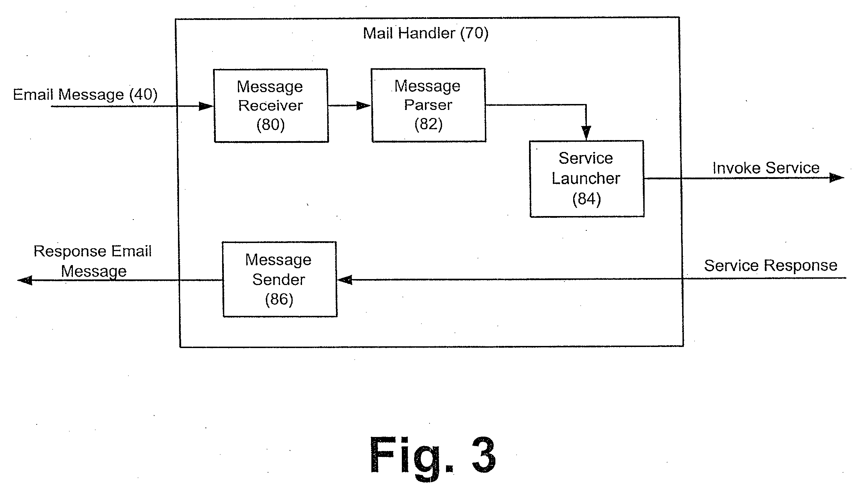

Fig. 3 illustrates the mail handler (70) in one exemplary embodiment. The mail handler (70) comprises a message receiver (80) that obtains the email message (40) from the mail server (22). In one embodiment, the message receiver (80) is a Post Office Protocol-3 (POP3) email client. In another embodiment, the message receiver (80) is an Simple Mail Transfer Protocol (SMTP) message receiver. The message receiver (80) passes the email message (40) to a message parser (82). The message parser (82) extracts the access function, command or data input from the message (40) for appropriate action.

The following describes an example in which email message (40) carries the service (52) along with a command to invoke the service (52). The message parser (82) extracts the service (52) from the email message (40) along with the command to invoke. In response to the command to invoke, the message parser (82) passes the service (52) to a service launcher (84). The service launcher (84) invokes the service (52). In an embodiment in which the service (52) is a JAVA application program, the service launcher (84) uses utilities provided in the underlying JAVA virtual machine on the device (20) to invoke the service (52).

Once service (52) is invoked, it may generate a service response that is passed to a message sender (86). The message sender (86) sends the service response in a response email message back to the reply email address of the email message (40). The service response may contain application-specific information.

If the email message (40) carries a command for the service (52) after it is invoked, then the message parser (82) extracts the command from the email message (40) and passes the command on to the service (52). Any service response to the command is sent back to the originator of the email message (40) by the message sender (86).

Fig. 4 illustrates computing device (20) in one exemplary embodiment. The computing device (20) comprises a set of computing resources (90) along with a set of device-specific hardware. For example, the computing resources (90) may include processor hardware, memory, storage, communication hardware, software support with an operating system and drivers, etc. If the computing device (20) is a printer, then the device-specific hardware may include printing hardware, print memory, etc. The service (52), along with a set of services (160-162), and the service handler (52) run on top of a virtual machine (91). The virtual machine (91) includes routines for accessing hardware and for sending and receiving messages using standard mail and web protocols. The virtual machine (91) may be, for example, a JAVA virtual machine.

In one embodiment, the service (52) is a diagnostic service that logs data associated with the device-specific hardware in the device (20). The computing element (30) may send a command in an email message to cause the service (52) to start logging data, later send a command to stop logging data, and then send a command that causes the service (52) to return the logged data. Alternatively, the web client (26) may invoke these same commands using links provided on a web page generated by the service handler (50).

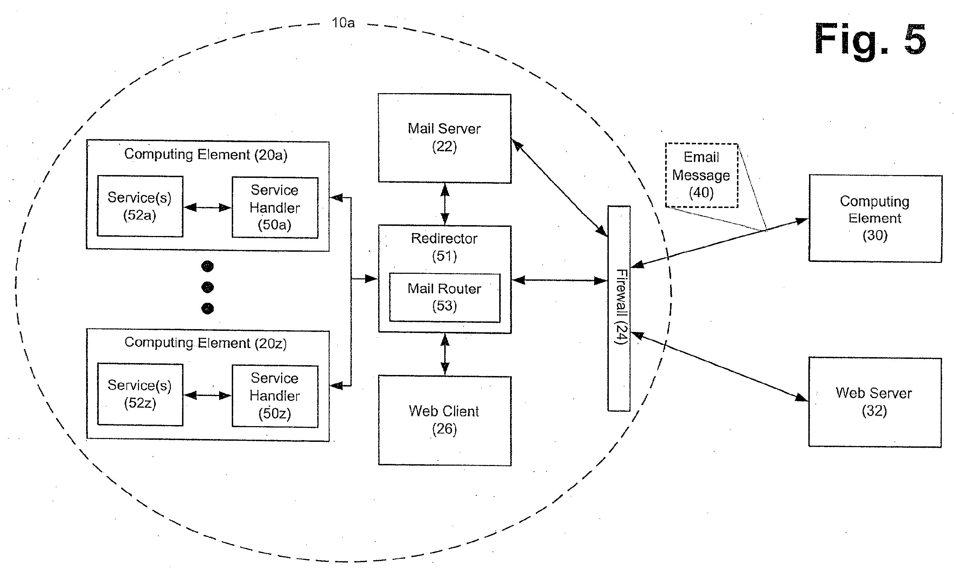

Fig. 5 illustrates a computer network that is one embodiment of the present invention comprising a redirector (51) to increase the capacity of the network to provide services in response to e-mailed access functions. The embodiment of Fig. 5 is similar to that illustrated in Fig. 1 and a redundant explanation of elements already described will be omitted.

As shown in Fig. 5 and as described above, a computing element (30) outside a discrete network (10a) may transmit an email message (40) through the firewall (24) of the network (10a). As described above, this message may contain, for example, an access function for a service on the network (10a), a service to be invoked on the network (10a) or a location, e.g., a URL, where a service can be obtained for use by the network (10a).

This email message (40) is received by the network's mail server (22). The email message (40) may be addressed to a particular service or computing element on the network (10a). However, a redirector (51) is configured to serve as a proxy for such addresses. Consequently, when an email message (40) is received that is intended to invoke or access a service available on the network (10a), that message (40) is sent to the redirector (51) as the proxy for any computing element providing a service on the network (10a).

Rather than having a single computing element (20; Fig. 1) providing services (e.g., 52; Fig. 1), the network (10a) of this embodiment comprises a number of computing elements (20a-20z) each of which provides a service handler (50a-50z) and one or more services (52a-52z). The services (52a-52z) and service handlers (50a-50z) may be embodied as described above.

Due to the number of computing elements (20a-20z) provided, the amount of services provided by the network (10a) can be greatly increased without requiring the computing element (30) to track which computing element (20a-20z) provides which service and manage email addresses for each such service/computing element. Rather, only the redirector (51) needs to track which computing element (20a-20z) provides which service.

The redirector (51), upon receipt of an e-mail (40) relating to a specific service, will forward the e-mail message (40) on to the appropriate computing element (20a-20z) that provides or is available to load that service (52a-52z). A mail router (53) in the redirector (51) can review the addressing or content of an incoming e-mail message (40) to determine the appropriate computing element (20a-20z) to which the message (40) should be sent.

With the redirector (51) serving as a mail proxy for the computing elements (20a-20z) on the network (10a) that provide services (52a-52z), a larger number of computing elements (20a-20z) and consequent services (52a-52z) can be included in the network (10a) and accessed across the firewall (24) using email messages (e.g., 40). Additionally, as functionality is relocated from the computing element (30) to the computing elements (20a-20z), the client computing element (30) can contain more applications and rely on the network resources to support those applications.

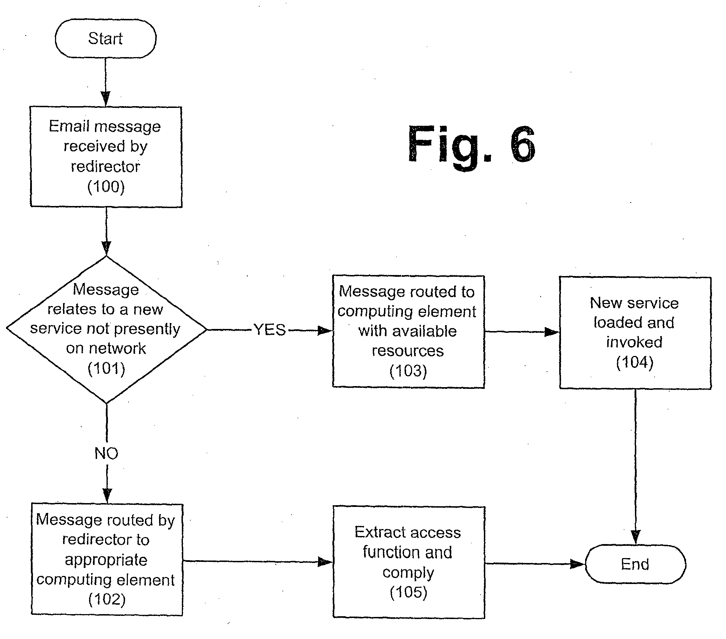

Fig. 6 is a flowchart illustrating a method according to principles of the present invention that can be implemented by a system such as that illustrated in Fig. 5 or the like. As shown in Fig. 6, the method commences when an email message is received by the network mail server and routed to the redirector as proxy for the computing elements with services controllable by email (step 100).

The redirector will first determine if the message relates to a service already on the network (decision 101). Alternatively, the message may contain the service or indicate where the service can be obtained, for example, by specifying a URL. If the message relates to a service already on the network, the message is routed by the redirector to the appropriate computing element in the network that supports that service (step 102). A service handler on that computing element then extracts the access function, i.e., the command or input data, from the message and complies with that access function by, e.g., invoking the service, submitting a command or data to the service, etc. (step 105).

If the message relates to a service not yet supported by the network, the message is routed to a computing element with available computing resources (step 103). A service handler on that computing element will then extract the service from the message or the directions for obtaining the new service. If the service is extracted from the message, it is then invoked (step 104). If directions for obtaining the service are extracted, the service is first obtained and loaded, for example, from a specific URL, and then invoked (step 104).

Where indicated, a response email may also be generated and sent to the sender of the original email message containing the access function.

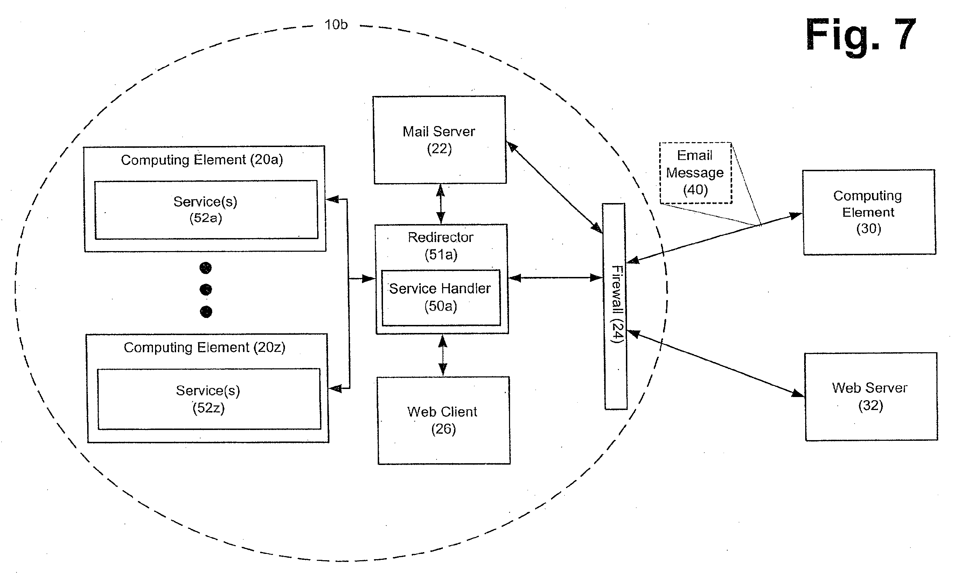

Fig. 7 illustrates a computer network that is one embodiment of the present invention comprising a redirector (51) with a service handler that is used to increase the capacity of the network to provide services in response to e-mailed access functions. The embodiment of Fig. 7 is similar to that illustrated in Figs. 1 and 5 and a redundant explanation of elements already described will be omitted.

As shown in Fig. 7 and as described above, a computing element (30) outside a discrete network (10a) may transmit an email message (40) through the firewall (24) of the network (10b). As described above, this message may contain, for example, an access function for a service on the network (10b), a service to be invoked on the network (10b) or a URL where a service can be obtained for use by the network (10b).

This mail message (40) is received by the network's mail server (22). The mail message (40) may be addressed to a particular service or computing element on the network (10a). However, a redirector (51) is configured to serve as a proxy for such addresses. Consequently, when an email message (40) is received that is intended to invoke or access a service available on the network (10a), that message (40) is sent to the redirector (51) as the proxy for computing elements providing a service on the network (10a).

Rather than having a single computing element (20; Fig. 1) providing services (e.g., 52; Fig. 1), the network (10b) of this embodiment includes a number of computing elements (20a-20z) each of which support one or more services (52a-52z). Due to the number of computing elements (20a-20z) provided, the amount of services provided by the network (10b) can be greatly increased.

The redirector (51) contains a service handler (50a). This service handler (50a) is preferably embodied according to the description of the service handler given above. Upon receipt of an e-mail (40) relating to a service, the service handler (50a) in the redirector (5 1a) will extract the access function from the message. In other works, the service handler (50a) will extract from the incoming email message, for example, a command to invoke a service already on the network, a command or data to be submitted to a service on the network, a service to load to the network or a location (URL) where a service can be obtained for use on the network.

The service handler (50a) then appropriately complies with the extracted access function. In doing so, the service handler (50a) may invoke a service (52a-52z) supported by a computing element (20a-20z) or supply a command or data to an executing service (52a-52z). The service handler (50a) may load a service (e.g., 52a) received by email message on an available computing element (e.g., 20a). The service handler (50a) may access a specified URL to obtain or access a service for use on the network.

With the redirector (51) serving as a mail proxy for the computing elements (20a-20z) on the network (10a) that provide services (52a-52z), a larger number of computing elements (20a-20z) and consequent services (52a-52z) can be included in the network (10a) and accessed across the firewall (24) using email messages (e.g., 40).

The service handler (50a) preferably comprises the functionality of a web server that generates one or more web pages for the computing elements (20a-20z). One or more of the web pages of the computing elements (20a-20z) may provide links to the services (52a-52z) running on the computing elements (20a-20z). The services (52a-52z), once installed on the computing elements (20a-20z), may be accessed by web clients (e.g., 26, 32) through the web pages of the computing elements (20a-20z). Web clients that may access the web pages of the computing element (20a-20z) include web clients within the network (10) and/or web clients outside of the network (10) that are configured to pass through the firewall (24).

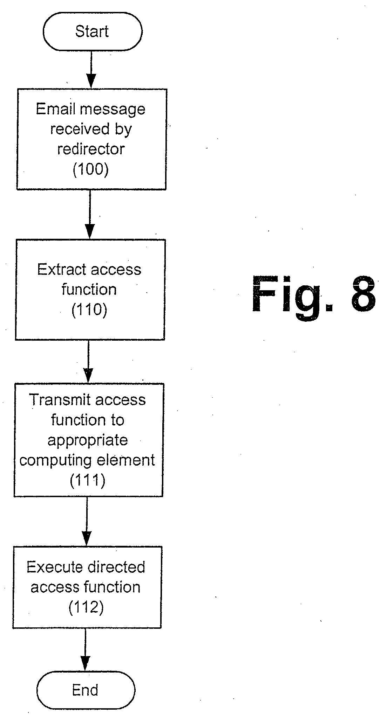

Fig. 8 is a flowchart illustrating a method that can be implemented by a system such as that illustrated in Fig. 7 or the like. As shown in Fig. 8, the method commences when an email message is received by the network mail server and routed to the redirector as proxy for computing elements with services controllable by email (step 100).

After an email message is received, the service handler on the redirector extracts the access function from the email message (step 110). As before, this access function may, for example, be a command or data input for a service on the network, including a command to invoke an available service. The access function may also be a service to be loaded on a computing element of the network or directions for locating and downloading a service to be loaded on a computing element of the network.

After extraction, the redirector transmits the access function to an appropriate computing element (step 111). If the access function is a command or data in put for an existing service, the redirector will transmit the access function to the network computing element that supports that function. If the access function is a new service or directions for downloading a new service, the redirector will transmit the access function to a network computing element with available resources.

The computing element will then receive and execute the access function (step 112), for example, invoking a service, entering a command or data to an operating service, loading a newly received service, downloading a specified service from a URL, etc. A response email may then be returned to the sender of the original email message.

The disclosures in United States patent application No. 10/052,612, from which this application claims priority, and in the abstract accompanying this application are incorporated herein by reference.

## Claims

1. A computer network for providing services, including:
a plurality of computing elements (20a-20z) each of which includes computing resources (90) for supporting one or more services (52a-52z); and
a redirector (51, 51a), communicatively connected to each of said computing elements (20a-20z), configured to serve as an email proxy for said plurality of computing elements (20a-20z);
wherein said services (52a-52z) are controlled by email messages (40) routed by said redirector (51, 51a) among said plurality of computing elements (20a-20z).

2. A network as in claim 1, wherein:
each of said plurality of computing elements (20a-20z) includes a service handler (50a-50z); and
said service handler (50) on a computing element (20) extracts an access function from an incoming email message (40) and complies with said extracted access function.

3. A network as in claim 2, wherein said redirector (51) includes a mail router (53) for routing email messages (40).

4. A network as in claim 1, 2 or 3, wherein:
said redirector (51a) includes a service handler (50a) for extracting an access function from incoming email messages (40); and
said service handler (50a) complies with said extracted access function by transmitting commands or data to said plurality of computing elements (20a-20z) supporting said services (52a-52z).

5. A method of providing services with a computer network (100) that includes a plurality of computing elements (20a-20z) each of which includes computing resources (90) for supporting one or more services (52), and a redirector (51, 51a), communicatively connected to each of said computing elements (20a-20z); said method including the steps of:
receiving an e-mail message (40) addressed to one of said computing elements (20a-20z) for controlling a service (52a-52z); and
routing at least some of said e-mail message to a corresponding computing element (20a-20z) with said redirector (51, 51a) that is configured to function as an e-mail proxy for said computing elements (20a-20z).

6. A method as in claim 5, including the steps of:
routing an email message (40) to a computing element (20a-20z) with said redirector (51, 51a);
extracting an access function from that email message (40) with a service handler (50a-50z) on that computing element (20a-20z); and
complying with said extracted access function.

7. A method as in claim 5, including the steps of:
extracting an access function from incoming email messages (40) with a service handler (50a) on said redirector (51a); and
complying with said extracted access function by transmitting commands or data from said email message (40) to one of said plurality of computing elements (20a-20z) supporting said services (52a-52z).

8. A method as in claim 5, including accessing said services (52a-52z) with a web client (26, 32) that communicates with said redirector (51, 51a).

9. A method as in claim 8, including generating web pages for said web client (26, 32) with said redirector (51, 51a), said web pages being related to said services (52a-52z).

10. A method as in claim 6 or 7, including sending a response email message following compliance with said extracted access function.
